(19) Europäisches Patentamt
European Patent Office
Office européen des brevets

(11) **EP 3 852 915 B1**

(12) **EUROPEAN PATENT SPECIFICATION**

(45) Date of publication and mention
of the grant of the patent:
**22.10.2025 Bulletin 2025/43**

(21) Application number: **19766276.0**

(22) Date of filing: **17.09.2019**

(51) International Patent Classification (IPC):
**B01J 4/00** (2006.01)     **C01B 3/34** (2006.01)
**C10J 3/72** (2006.01)     **C01B 3/36** (2006.01)

(52) Cooperative Patent Classification (CPC):
**B01J 4/008; C01B 3/36; C10J 3/725**

(86) International application number:
**PCT/EP2019/074856**

(87) International publication number:
**WO 2020/058263 (26.03.2020 Gazette 2020/13)**

(54) **PROCESS FOR THE PRODUCTION OF SYNGAS**

VERFAHREN ZUR HERSTELLUNG VON SYNGAS

PROCÉDÉ DE PRODUCTION DE GAZ DE SYNTHÈSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Validation States:
**MA**

(30) Priority: **18.09.2018 EP 18195213**

(43) Date of publication of application:
**28.07.2021 Bulletin 2021/30**

(73) Proprietor: **ETH Zürich**
**8092 Zürich (CH)**

(72) Inventors:
• **ACKERMANN, Simon**
**8102 Oberengstringen (CH)**
• **DIERINGER, Paul**
**21073 Hamburg (DE)**
• **FURLER, Philipp**
**8704 Herrliberg (CH)**
• **STEINFELD, Aldo**
**5200 Brugg (CH)**
• **BULFIN, Brendan**
**8810 Horgen (CH)**

(74) Representative: **Schmitz, Joseph**
**Isler & Pedrazzini AG**
**Giesshübelstrasse 45**
**Postfach 1772**
**8027 Zürich (CH)**

(56) References cited:
**CN-A- 108 117 045**     **US-A1- 2017 210 622**
**US-A1- 2018 118 576**

• **PETER T. KRENZKE ET AL: "Thermodynamic Analysis of Syngas Production via the Solar Thermochemical Cerium Oxide Redox Cycle with Methane-Driven Reduction", ENERGY & FUELS., vol. 28, no. 6, 19 June 2014 (2014-06-19), WASHINGTON, DC, US., pages 4088 - 4095, XP055556381, ISSN: 0887-0624, DOI: 10.1021/ ef500610n**
• **JONATHAN R. SCHEFFE ET AL: "Synthesis, Characterization, and Thermochemical Redox Performance of Hf 4+ , Zr 4+ , and Sc 3+ Doped Ceria for Splitting CO 2", JOURNAL OF PHYSICAL CHEMISTRY C, vol. 117, no. 46, 21 November 2013 (2013-11-21), pages 24104 - 24114, XP055556389, ISSN: 1932-7447, DOI: 10.1021/jp4050572**

**EP 3 852 915 B1**

- AKBARI-EMADABADI S ET AL: "Production of hydrogen-rich syngas using Zr modified Ca-Co bifunctional catalyst-sorbent in chemical looping steam methane reforming", APPLIED ENERGY, vol. 206, 23 August 2017 (2017-08-23), pages 51 - 62, XP085256605, ISSN: 0306-2619, DOI: 10.1016/J.APENERGY.2017.08.174

- MICHAEL WELTE ET AL: "Combined Ceria Reduction and Methane Reforming in a Solar-Driven Particle-Transport Reactor", INDUSTRIAL & ENGINEERING CHEMISTRY RESEARCH, vol. 56, no. 37, 20 September 2017 (2017-09-20), pages 10300 - 10308, XP055556398, ISSN: 0888-5885, DOI: 10.1021/acs.iecr.7b02738

**Description**

TECHNICAL FIELD

The present invention relates to a process for the production of syngas, in particular via two-step redox cycling of metal oxides.

PRIOR ART

Thermodynamic Analysis of Syngas Production via the Solar Thermochemical Cerium Oxide Redox Cycle with Methane-Driven Reduction, Peter T. Krenzke and Jane H. Davidson, Energy & Fuels 2014 28 (6), 4088-4095 (XP055556381) discloses a process for the production of syngas using dilute methane as a feed gas and ceria as catalytic material.

Syngas, or synthesis gas, is a fuel gas mixture consisting primarily of hydrogen and carbon monoxide, and can be used for production of hydrogen, ammonia, methanol, and importantly, synthetic hydrocarbon fuels. Syngas can be produced from many sources, including natural gas (methane), coal, biomass, or virtually any hydrocarbon feedstock and $H_2O/CO_2$.

It is known to that the production of syngas can be realized by partial oxidation of methane via two-step redox cycling of metal oxides (also referred to as chemical looping). The two-step redox cycling is usually carried out at a temperature below 1300°C and comprises a first endothermic reduction of the metal oxide ($M_xO_y$) towards a metal oxide in non-stoichiometric state ($M_xO_{y-\beta}$), in which methane is partially oxidized to produce hydrogen ($H_2$) and carbon monoxide ($CO$) and a second exothermic oxidation of the metal oxide in non-stoichiometric state ($M_xO_{y-\beta}$) towards metal oxide ($M_xO_y$) in which water and/or carbon dioxide are reduced to produce further $H_2$ and/or $CO$.

However, the known process for the production of syngas suffers from a number of drawbacks, in particular during the step in which the metal oxide is reduced and methane is partially oxidized to produce hydrogen ($H_2$) and carbon monoxide ($CO$). Either on one hand the selectivity for hydrogen and carbon monoxide is optimal but then the conversion of methane is suboptimal seldom reaching more than 60%, meaning that almost half of the methane simply exits the process unreacted or on the other hand the conversion of methane is optimal but then selectivity for hydrogen and carbon monoxide is suboptimal, seldom reaching values of 55% for hydrogen or 65% for carbon monoxide, because the known process suffers from the formation of unwanted side-products, like water and carbon dioxide. Thus, selectivity is usually reached at the expense of conversion and vice-versa. From the above deficiencies in conversion and selectivity, it can further be derived that the energy upgrade factor, $U$, computed according to the formula

$$U = \frac{n_{CO} \cdot HV_{CO} + n_{H_2} \cdot HHV_{H_2} + n_{CH_4,out} \cdot HHV_{CH_4}}{n_{CH_4,in} \cdot HHV_{CH_4}}$$

remains distant from the theoretical maximum value of 1.28 for 100% conversion and 100% selectivity. Where $n_{CO}$ is the amount of CO, $n_{H_2}$ is the amount of $H_2$, $n_{CH_4}$,in is the amount of methane at the inlet, $n_{CH_4}$,out is the amount of unconverted methane at the outlet, HVco the heating value of CO, $HHV_{H_2}$ the higher heating value of $H_2$ and $HHV_{CH_4}$ the higher heating value of $CH_4$. In addition to the above considerations, redox cycling of the metal oxides can take in excess of 10 minutes, which limits the overall throughput.

It is therefore desirable to provide a process for the formation of syngas via two-step redox cycling of metal oxides, in which low hydrocarbon gas conversion and unwanted side-reactions can be avoided.

SUMMARY OF THE INVENTION

The present invention provides a process for the production of syngas in which both hydrocarbon gas conversion and hydrogen/carbon monoxide selectivity can be increased vis-à-vis known processes for the production of syngas via two-step redox cycling, and which inventive process for the production of syngas the cycling time can be further reduced.

It is an object of the present invention to provide a process for the production of syngas, comprising the steps of

a. generating hydrogen and/or carbon monoxide from a hydrocarbon gas by contacting said hydrocarbon gas with a metal oxide in a first non-stoichiometric state $M_xO_{y-\alpha}$ such as to reduce said metal oxide in a first non-stoichiometric state $M_xO_{y-\alpha}$ towards a second non-stoichiometric state $M_xO_{y-\beta}$

b. generating hydrogen and/or carbon monoxide from a regenerating gas by contacting the metal oxide in the second non-stoichiometric state $M_xO_{y-\beta}$ with said regenerating gas such as to oxidize the metal oxide in the second non-stoichiometric state $M_xO_{y-\beta}$ towards the first non-stoichiometric state $M_xO_{y-\alpha}$

characterized in that the $\beta > \alpha$ and $\alpha > 0$ and $\beta < y$ and wherein $\beta - \alpha$ is in the range of 0.01 and 0.05.

Thus, the invention relies on two-step redox cycling in which the metal oxide is cycled between a reduced non-stoichiometric state and an oxidized non-stoichiometric state, in contrast to known two-step redox cycling, in which the metal oxide is cycled between a reduced non-stoichiometric state and an essentially fully oxidized state, i.e. a first non-stoichiometric state in which $\alpha$ is inferior to 0.01. Thus, cycling between non-stoichiometric states of the metal oxide allows increasing hydrocarbon gas conversion and hydrogen/carbon monoxide selectivity in syngas production.

The process of the present invention may be carried out on a device for the production of syngas, configured to carry out the process according to the above, comprising at least

    a. a reaction chamber comprising a metal oxide,
    b. a heat source capable of heating the reaction chamber and controlled by a heat source control device,
    c. a first mass flow controller capable of controlling the inflow of hydrocarbon gas into the reaction chamber,
    d. a second mass flow controller capable of controlling the inflow of regeneration gas into the reaction chamber,

wherein the first mass flow controller is configured to control the flow of hydrocarbon gas into the chamber comprising the metal oxide such as to enable the reduction of the metal oxide in a first non-stoichiometric state $M_xO_{y-\alpha}$ towards a second non-stoichiometric state $M_xO_{y-\beta}$,
wherein the second mass flow controller is configured to control the flow of regenerating gas into the chamber comprising the metal oxide such as to enable the oxidation of the metal oxide in a second non-stoichiometric state $M_xO_{y-\beta}$ towards a first non-stoichiometric state $M_xO_{y-\alpha}$. Thus, the device relies on controlling the flow rate and the stream time at which the feedstock gases in both reductive and oxidative step of the two-step redox cycling are supplied to the metal oxide in order to ensure that the metal oxide is cycled between a reduced non-stoichiometric state and an oxidized non-stoichiometric state, instead of a reduced non-stoichiometric state and a fully oxidized stoichiometric state.

Further embodiments of the invention are laid down in the dependent claims.

BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

Fig. 1    shows methane (bottom curve) and carbon dioxide (top curve) conversion for conventional ceria redox cycling (a = 0 / $\beta$ = 0.16) during cycles 1 to 1200 and ceria redox cycling according to the present invention ($\alpha$ = 0.12 / $\beta$ = 0.16) during cycles 1201 to 2000.

Fig.2    shows hydrogen (bottom curve) and carbon monoxide (top curve) selectivity for conventional ceria redox cycling (a = 0 / $\beta$ = 0.16) during cycles 1 to 1200 and ceria redox cycling according to the present invention ($\alpha$ = 0.12 / $\beta$ = 0.16) during cycles 1201 to 2000.

DESCRIPTION OF PREFERRED EMBODIMENTS

It is an object of the present invention to provide a process for the production of syngas, comprising the steps of

    a. generating hydrogen and/or carbon monoxide from a hydrocarbon gas by contacting said hydrocarbon gas with a metal oxide in a first non-stoichiometric state $M_xO_{y-\alpha}$ such as to reduce said metal oxide in a first non-stoichiometric state $M_xO_{y-\alpha}$ towards a second non-stoichiometric state $M_xO_{y-\beta}$
    b. generating hydrogen and/or carbon monoxide from a regenerating gas by contacting the metal oxide in the second non-stoichiometric state $M_xO_{y-\beta}$ with said regenerating gas such as to oxidize the metal oxide in the second non-stoichiometric state $M_xO_{y-\beta}$ towards the first non-stoichiometric state $M_xO_{y-\alpha}$

characterized in that the $\beta > \alpha$ and $\alpha > 0$ and $\beta < y$ and wherein $\beta - \alpha$ is in the range of 0.01 and 0.05. It is understood that x and y are non-zero values and preferably are integers and M denominate the metal atom and O denominates oxygen atom.

The degree of non-stoichiometric state in the metal oxide may be controlling the supply of hydrocarbon gas or regenerating gas supplied to the metal oxide and interrupting the supply of the respective gas when the desired degree of non-stoichiometric state is reached.

The metal oxide may be in the form of a structure adapted to increase contact area between the hydrocarbon gas and/or to increase mass flow across the structure. Exemplary structures may for example be honeycomb structures, particle bed structures such as packed bed structures or fluidized bed structures, or porous structures such as open-cell foam. It is further understood that within the process according to the present invention, the metal oxide is in solid form.

In a preferred embodiment of the process according to the present invention, the metal oxide may be in the form of a packed bed of irregular particles of metal oxide such as crumbs.

In a preferred embodiment of the process according to the present invention, the metal oxide has low porosity and high specific surface area, which enables the process according to the present invention to be run at lower temperatures, which in turn leads to less stringent material requirements in the device for the production of syngas. Preferably, the metal oxide has a porosity $\varepsilon$ of less than or equal to 0.9, preferably of about 0.4 to about 0.9, more preferably of about 0.75 to about 0.9 when measured according to the below formula and/or a specific surface area of more than 20 000 $m^{-1}$, preferably of about 20 000 to about 30 000 000 $m^{-1}$, more preferably of about 500 000 to about 10 000 000 $m^{-1}$ when measured according to the below method.

The porosity is determined by the reactor volume, $V$, the mass of the reactive material, $m$, and the solid phase density of the metal oxide, $\rho$, according to the following equation:

$$\varepsilon = 1 - \frac{m}{V \cdot \rho}$$

The specific surface area is determined by the surface area related to the total bulk volume (solid and void) and measured via BET (Brunauer-Emmett-Teller) by probing with nitrogen as gaseous adsorbate.

In a preferred embodiment of the process according to the present invention, the metal oxide has a flow permeability K of 500 Darcy's or more, preferably of about 500 to about $10^9$ Darcy's, more preferably of about $10^7$ to about $10^9$ Darcy's when measured according to the below method, which enables the process according to the present invention to be run at higher mass rates. 1 Darcy = $9.86923 \cdot 10^{-13}$ $m^2$

In the case of open-cell foam-type structures, the flow permeability is determined by applying Darcy's law on the pressure drop of a flow throughout the structure. The pressure drop is determined by applying direct pore-level simulations of the mass and momentum conservation equation on the exact 3D digital geometry of the porous structure, obtained using high-resolution tomography.

In the case of packed beds the permeability is calculated with the porosity, $\varepsilon$, and the particle diameter, d, by applying the Kozeny-Carman equation:

$$K = \frac{\varepsilon^3 \cdot d^2}{(1 - \varepsilon)^2}$$

For example, when the metal oxide is ceria, has a porosity of less than 0.9, and/or a specific surface area of more than 20 000 $m^{-1}$, the process according to the present invention can be carried out at a temperature in the range of 600 °C to 1000 °C. In particular, the step a. can be carried out at a temperature in the range of 600 °C to 1000 °C and/or the step b. can be carried out a temperature in the range of 600 °C to 1000 °C.

In a preferred embodiment of the process according to the present invention, the hydrocarbon gas is chosen from wood gas, coal gas, natural gas, methane and preferably is methane.

In a preferred embodiment of the process according to the present invention, the regeneration gas is chosen from water in the form of steam, carbon dioxide or mixtures of steam and carbon dioxide.

In a preferred embodiment of the process according to the present invention, the non-stoichiometric metal oxides capable of non- stoichiometry can be chosen from metal oxides having a perovskite structure $ABO_3$ where A is chosen from Sr, Ca, Ba, La and B is chosen from Mn, Fe, Ti, Co, Al, such as for example $CaTiO_3$, from iron oxides such as iron(II,III) oxide and mixed ferrites $M_xFe_{3-x}O_4$ where M is preferably chosen from Zn (Zn-ferrite), Co (Co-ferrite), Ni (Ni-ferrite), Mn (Mn-ferrite), from tungsten trioxide ($WO_3$), , from stannic oxide ($SnO_2$), and from ceria ($CeO_2$) and solid solutions of ceria ($Ce_{1-x}M_xO_2$) where M can be Zr, Hf, Sm, La, Sc such as with Zr (for example $Ce_{0.85}Zr_{0.15}O_2$) and Hf ($Ce_{1-x}Hf_xO_2$), preferably from ceria and solid solutions of ceria ($Ce_{1-x}M_xO_2$). In particular, among metal oxides, ceria offers high oxygen exchange capacities, fast oxygen transport across its lattice as well as fast kinetics during both redox steps. It is understood that each of the above metal oxides capable of non-stoichiometry will have a first non-stoichiometric state $M_xO_{y-\alpha}$ and a second non-stoichiometric state $M_xO_{y-\beta}$ and corresponding range between $\alpha$ and $\beta$ in which the syngas may be produced with the desired selectivity and conversion. In the following, data is provided for ceria, solid solutions of ceria with Zr and nickel-ferrite. It is understood that the optimal values for other metal oxides lies within the skill of the person skilled in the art.

In a preferred embodiment of the process according to the present invention and in the case where the metal oxide is ceria ($CeO_{2-\alpha}/CeO_{2-\beta}$), $\beta - \alpha$ is in the range of 0.01 and 0.05 and can preferably be in the range of 0.02 to 0.05.

In a preferred embodiment of the process according to the present invention and in the case where the metal oxide is ceria ($CeO_{2-\alpha}/CeO_{2-\beta}$), $\beta$ is in 0.05 or more; or in the range of 0.10 and 0.25, and $\alpha$ is in the range of 0.05 or more, or in the range of 0.05 and 0.2, preferably $\beta$ is in the range of 0.1 and 0.2 and $\alpha$ is in the range of 0.1 and 0.2. Exemplary values for ceria are for example when $\alpha$ is about 0.12 and $\beta$ is about 0.16. While higher syngas yield can be achieved by larger differences between $\beta$ and $\alpha$, it is understood that $\beta$ should nonetheless be chosen such that the non-stoichiometry does not damage the metal oxide or its ability to carry out the process. For instance, in the case of ceria, it is not preferred to allow for values of $\beta$ exceeding 0.25 because side-products such as solid carbon occur due to a phase change in the ceria lattice. On the other hand, it is also not preferred to allow for values of $\alpha$ below 0.05 because side-products such as water or carbon dioxide occur when a hydrocarbon gas such as methane is oxidized. In addition, in the case of ceria, when $\alpha$ is about 0.1 or more, another side-reaction where non-stoichiometric ceria reacts with the generated hydrogen and/or carbon monoxide to yield water and carbon dioxide can be reduced.

In a preferred embodiment of the process according to the present invention and in the case where the metal oxide is a nickel-ferrite ($NiFe_2O_{4-\alpha}/NiFe_2O_{4-\beta}$), $\beta - \alpha$ is in the range of 0.01 and 0.05 and can preferably be in the range of 0.02 to 0.05.

In a preferred embodiment of the process according to the present invention and in the case where the metal oxide is a nickel-ferrite ($NiFe_2O_4$), $\beta$ is in 0.3 or more; or in the range of 0.3 and 0.5, and $\alpha$ is in the range of 0.3 or more, or in the range of 0.3 and 0.5.

In a preferred embodiment of the process according to the present invention and in the case where the metal oxide is a solid solution of ceria and zirconia such as $Ce_{0.85}Zr_{0.15}O_2$ ($Ce_{0.85}Zr_{0.15}O_{2-\alpha}/Ce_{0.85}Zr_{0.15}O_{2-\beta}$), $\beta - \alpha$ is in the range of 0.01 and 0.05 and can preferably be in the range of 0.02 to 0.05. Solid solutions of ceria and zirconia exhibit slightly lower oxygen affinity than ceria and thus they can be run at lower temperatures such as for example 800°C.

In a preferred embodiment of the process according to the present invention and in the case where the metal oxide is a solid solution of ceria and zirconia such as $Ce_{0.85}Zr_{0.15}O_2$ ($Ce_{0.85}Zr_{0.15}O_{2-\alpha}/Ce_{0.85}Zr_{0.15}O_{2-\beta}$), $\beta$ is 0.1 or more; or in the range of 0.10 and 0.2, and $\alpha$ is in the range of 0.1 or more, or in the range of 0.1 and 0.2.

In a preferred embodiment of the process according to the present invention and in the case where the metal oxide is ceria, the process is carried out at a temperature in the range of 600 °C to 1400 °C. In particular, the step a. can be carried out at a temperature in the range of 600 °C to 1400 °C, preferably in the range of 750°C to 1250°C, and the step b. can be carried out a temperature in the range of 600 °C to 1400 °C. It is understood that in general, the process may not be carried out at a temperature that damages the metal oxide or that leads to deterioration of its ability to undergo the redox cycling necessary to the production of syngas. For instance, at temperatures above 1350, in particular above 1400°C, methane dissociates into hydrogen and solid carbon which solid carbon can form depositions on the metal oxide. In particular, in the case of ceria, when the step a. is carried out at a temperature in excess of 750°C, or in the range from 750°C to 1400°C, the reaction rate is significantly increased which allows cycling at a higher frequency.

In a preferred embodiment of the process according to the present invention and in the case where the metal oxide is nickel ferrite, the process is carried out at a temperature in the range of 600 °C to 1300 °C. In particular, the step a. can be carried out at a temperature in the range of 600 °C to 1300 °C, preferably in the range of 600°C to 1250°C, and the step b. can be carried out a temperature in the range of 600 °C to 1300 °C.

In a preferred embodiment of the process according to the present invention and in the case where the metal oxide is a solid solution of ceria and zirconia, the process is carried out at a temperature in the range of 600 °C to 1300 °C. In particular, the step a. can be carried out at a temperature in the range of 600 °C to 1300 °C, preferably in the range of 600°C to 1250°C, and the step b. can be carried out a temperature in the range of 600 °C to 1300 °C.

In a preferred embodiment of the process according to the present invention, the metal oxide is in the form of a porous structure, in particular an open-cell foam structure. Open cell foam provides a good balance between contact area between metal oxide and hydrocarbon gas and mass flow permeability and heat transfer.

In a preferred embodiment of the process according to the present invention, the metal oxide is in the form of a porous structure allowing for a gas mass flow rate in excess of 1 ml/min/g.

The process of the present invention may be carried out in a device for the production of syngas, configured to carry out the process according to any of the previous claims, comprising at least

    a. a reaction chamber comprising a metal oxide,
    b. a heat source capable of heating the reaction chamber and controlled by a heat source control device,
    c. a first mass flow controller capable of controlling the inflow of hydrocarbon gas into the reaction chamber,
    d. a second mass flow controller capable of controlling the inflow of regeneration gas into the reaction chamber,

    wherein the first mass flow controller is configured to control the flow of hydrocarbon gas into the chamber comprising the metal oxide such as to enable the reduction of the metal oxide in a first non-stoichiometric state $M_xO_{y-\alpha}$ towards a second non-stoichiometric state $M_xO_{y-\beta}$,
    wherein the second mass flow controller is configured to control the flow of regenerating gas into the chamber comprising the metal oxide such as to enable the oxidation of the metal oxide in a second non-stoichiometric state $M_xO_{y-\beta}$ towards a first non-stoichiometric state $M_xO_{y-\alpha}$.

In the device, the first and second mass controllers are configured to control the flow of hydrocarbon gas/regeneration gas into the chamber comprising the metal oxide such that β-a is in the range of 0.01 and 0.05.

In the device, the reaction chamber may comprise a tubular reactor chamber, preferably having a diameter of from about 0.02 m to about 0.2 m and/or a length of at least 5 times the diameter.

In the device, the reaction chamber may be delimited by a tubular structure having an inner diameter corresponding to the diameter of the reaction chamber. The tubular structure may be made from a material such as a metal or metal alloy that has a melting point of from about 1000 °C or more, more preferably from a material having a melting point of between 1000°C and 1400 °C (e.g. metal alloys obtainable under the trademark Incoloy 800HT from Special Metals Corporation, US).

In the device, the heat source capable of heating the reaction chamber may be a combustion device such as a burner in which mainly the exhaust gases resulting from the combustion of a fuel are used as heat transfer fluid or may be a solar-powered device such as a solar receiver in which a circulating heat transfer fluid such as for example steam, carbon dioxide, air or radiating gases are used as heat transfer fluid. The reaction chamber may thus be heated by thermally contacting the heat transfer fluid with the reaction chamber but without introducing the heat transfer fluid into the reaction chamber.

In the device, the heat transfer fluid emanating from the heat source is guided along the longitudinal dimension of the tubular reaction chamber such as to transfer thermal energy into the reaction chamber across the tubular structure delimiting the reaction chamber.

In the device, the flow of the heat transfer fluid along the longitudinal reaction chamber flows in opposite direction of the hydrocarbon gas and/or the regeneration gas inflow in the reaction chamber such as to increase the transfer of thermal energy from the heat transfer fluid to the hydrocarbon gas and/or the regeneration gas.

The device may further comprise an analytic device capable of determining the composition of syngas outflow with respect to chemical composition of its constituents and /or amount of its constituents, and wherein the inflow of hydrocarbon gas controlled by the first mass flow controller is determined according to the chemical composition of the constituents and /or amount of its constituents and the inflow of regenerating gas controlled by the second mass flow controller is determined according to the chemical composition of the constituents and /or amount of its constituents. In this configuration, the redox state of the metal oxide can be determined indirectly on-line by determining the chemical composition and /or amount of the constituents of the syngas exiting the reaction chamber and by applying a mass balance for the oxygen atoms.

EXPERIMENTAL DATA

In a device equipped with a tubular fixed bed reactor consisting of an open-cell foam monolith made of ceria, 2000 isothermal cycles were performed using methane as hydrocarbon gas and carbon dioxide as regenerating gas.

Cycles 1 to 1200 were performed in the normal non-stoichiometry range where $\alpha$ equals 0 and $\beta$ equals about 0.16 at T = 1100°C and cycles 1201 to 2000 were performed in the non-stoichiometry range where $\alpha$ equals 0.12 and $\beta$ equals about 0.16 at T = 1160°C.

For cycles 1 to 1200, in the reduction step of the redox cycle, significant $H_2O$ and $CO_2$ formation was observed, which resulted in relatively low selectivity for $H_2$ and CO, in the range 50 to 65%. Also, $CH_4$ conversion was about 55%. In the oxidation step of the redox cycle, $CO_2$ conversion amounted to about 60%. Thus, the energy upgrade factor averaged over cycles 1 to 1200 was 1.16 because of low $CH_4$ conversion and low $H_2$/CO selectivity.

For cycles 1201-2000, in the reduction step of the redox cycle, substantially higher $CH_4$ conversion of about 80% was observed and $H_2$ selectivity and CO selectivity substantially increased to 87%, and 94%, respectively. In the oxidation step of the redox cycle, $CO_2$ conversion amounted to about 90%. Thus, the energy upgrade factor averaged over cycles 1201 to 2000 was 1.22 because of higher $CH_4$ conversion and higher $H_2$/CO selectivity.

Furthermore, because the oxidation step in cycles 1200 to 2000 was shortened by only oxidizing the metal oxide to a non-stoichiometric value of $\alpha$ equals 0.12, the cycle time decreased from 9.5 min in cycles 1 to 1200 to 2.2 min in cycles 1201-2000.

Table 1 shows a comparison of different metrics between the normal non-stoichiometry range where $\alpha$ equals 0 and $\beta$ equals about 0.16 at T = 1100°C and a non-stoichiometry range according to the present invention where $\alpha$ equals 0.12 and $\beta$ equals about 0.16 at T = 1160°C.

Table 1

| Reduction step | $\alpha$ = 0 / $\beta$ = 0.16 | $\alpha$ = 0.12 / $\beta$ = 0.16 |
|---|---|---|
| $CH_4$ conversion | 55% | 79% |
| $H_2$ selectivity | 52% | 87% |

(continued)

| Reduction step | $\alpha = 0$ / $\beta = 0.16$ | $\alpha = 0.12$ / $\beta = 0.16$ |
|---|---|---|
| CO selectivity | 64% | 97% |
| Non-stoichiometry | 0.16 | 0.16 |
| $H_2$:CO ratio | 1.6 | 1.9 |
| **Oxidation step** | | |
| CO2 conversion 60% 94% | 60% | 94% |
| Nonstoichiometry ($\beta ox$) | 0 | 0.12 |
| **Overall redox cycle** | | |
| Energy upgrade factor (U) | 1.16 | 1.22 |

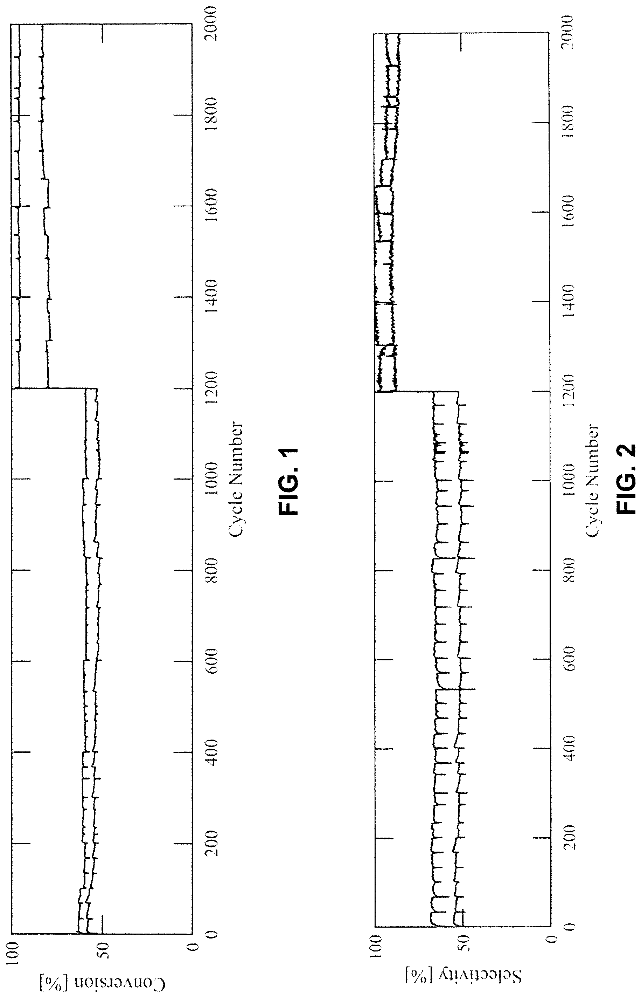

As can be seen from Figure 1, which shows measurements made during the reduction step and using the above-described experimental setup, (a), that the cycle-averaged molar flow rate for syngas is increased because of the shorted cycling time, (b) that $CH_4$ conversion is increased and (c) CO and $H_2$ selectivity is increased.

**Claims**

1. A process for the production of syngas, comprising the steps of

    a. generating hydrogen and/or carbon monoxide from a hydrocarbon gas by contacting said hydrocarbon gas with a metal oxide in a first non-stoichiometric state $M_xO_{y-\alpha}$ such as to reduce said metal oxide in a first non-stoichiometric state $M_xO_{y-\alpha}$ towards a second non-stoichiometric state $M_xO_{y-\beta}$ ;
    b. generating hydrogen and/or carbon monoxide from a regenerating gas by contacting the metal oxide in the second non-stoichiometric state $M_xO_{y-\beta}$ with said regenerating gas such as to oxidize the metal oxide in the second non-stoichiometric state $M_xO_{y-\beta}$ towards the first non-stoichiometric state $M_xO_{y-\alpha}$ ;

    **characterized in that** the $\beta > a$ and $a > 0$ and $\beta < y$ and wherein $\beta - a$ is in the range of 0.01 and 0.05.

2. The process for the production of syngas according claim 1, wherein the hydrocarbon gas is chosen from methane and/or the regeneration gas is chosen from steam, carbon dioxide or mixtures of steam and carbon dioxide.

3. The process for the production of syngas according to any preceding claim, wherein the metal oxides are chosen from ceria and solid solutions of ceria ($Ce_{1-x}M_xO_2$) where M can be Zr, Hf, Sm, La, Sc, from metal oxides having a perovskite structure $ABO_3$ where A is chosen from Sr, Ca, Ba, La and B is chosen from Mn, Fe, Ti, Co, Al, such as for example $CaTiO_3$, from iron oxides such as iron(II,III) oxide and mixed ferrites $M_xFe_{3-x}O_4$ where M is preferably chosen from Zn (Zn-ferrite), Co (Co-ferrite), Ni (Ni-ferrite), Mn (Mn-ferrite), from tungsten trioxide ($WO_3$), , from stannic oxide ($SnO_2$), and from ceria ($CeO_2$) and solid solutions of ceria ($Ce_{1-x}M_xO_2$) where M can be Zr, Hf, Sm, La, Sc such as with Zr (for example $Ce_{0.85}Zr_{0.15}O_2$) and Hf ($Ce_{1-x}Hf_xO_2$), preferably from ceria.

4. The process for the production of syngas according to any preceding claim, wherein in the case where the metal oxide is ceria, $\beta$ is in the range of 0.05 and 0.25 and a is in the range of 0.05 and 0.25, preferably $\beta$ is in the range of 0.1 and 0.25 and a is in the range of 0.1 and 0.25.

5. The process for the production of syngas according to any of claims 1 to 3, wherein in the case where the metal oxide is a solid solution of ceria and Zr such as $Ce_{0.85}Zr_{0.15}O_2$, $\beta$ is 0.1 or more; or in the range of 0.1 and 0.2, and a is in the range of 0.1 or more, or in the range of 0.1 and 0.2.

6. The process for the production of syngas according to any of claims 1 to 3, wherein in the case where the metal oxide is nickel-ferrite, $\beta$ is in 0.3 or more; or in the range of 0.3 and 0.5, and a is in the range of 0.3 or more, or in the range of 0.3 and 0.5.

7. The process for the production of syngas according to any preceding claim, wherein the process is carried out at a temperature in the range of 600 °C to 1400 °C.

8. The process for the production of syngas according to any preceding claim, wherein the metal oxide is in the form of a porous structure, in particular an open-cell foam structure.

**Patentansprüche**

1. Ein Verfahren zur Herstellung von Synthesegas, das die folgenden Schritte umfasst:

   a. Erzeugen von Wasserstoff und/oder Kohlenmonoxid aus einem Kohlenwasserstoffgas durch Kontaktieren des Kohlenwasserstoffgases mit einem Metalloxid in einem ersten nichtstöchiometrischen Zustand $M_xO_{y-\alpha}$, um das Metalloxid in einem ersten nichtstöchiometrischen Zustand $M_xO_{y-\alpha}$ zu einem zweiten nichtstöchiometrischen Zustand $M_xO_{y-\beta}$ zu reduzieren;
   b. Erzeugen von Wasserstoff und/oder Kohlenmonoxid aus einem Regenerationsgas durch Kontaktieren des Metalloxids im zweiten nichtstöchiometrischen Zustand $M_xO_{y-\beta}$ mit dem Regenerationsgas, um das Metalloxid im zweiten nichtstöchiometrischen Zustand $M_xO_{y-\beta}$ zum ersten nichtstöchiometrischen Zustand $M_xO_{y-\alpha}$ zu oxidieren;
   **dadurch gekennzeichnet, dass** $\beta$ > a und a > 0 und $\beta$ < y ist und wobei $\beta$ - a im Bereich zwischen 0,01 und 0,5 liegt.

2. Das Verfahren zur Herstellung von Synthesegas gemäß Anspruch 1, wobei das Kohlenwasserstoffgas aus Methan ausgewählt wird und/oder das Regenerationsgas aus Dampf, Kohlendioxid oder Gemischen aus Dampf und Kohlendioxid ausgewählt wird.

3. Das Verfahren zur Herstellung von Synthesegas nach einem der vorhergehenden Ansprüche, wobei die Metalloxide aus Ceroxid und festen Lösungen von Ceroxid ($Ce_{1-x}M_xO_2$) ausgewählt werden, wobei M Zr, Hf, Sm, La, Sc sein kann, aus Metalloxiden mit Perowskitstruktur $ABO_3$ ausgewählt werden, wobei A Sr, Ca, Ba, La und B Mn, Fe, Ti, Co, Al sein kann, wie beispielsweise $CaTiO_3$, aus Eisenoxiden wie Eisen(II,III)-oxid und gemischten Ferriten $M_xFe_{3-x}O_4$ ausgewählt werden, wobei M vorzugsweise Zn (Zn-Ferrit), Co (Co-Ferrit), Ni (Ni-Ferrit), Mn (Mn-Ferrit), Wolframtrioxid ($WO_3$), Zinnoxid ($SnO_2$ und Ceroxid ($CeO_2$) sein kann, und aus festen Lösungen von Ceroxid ($Ce_{1-x}M_xO_2$) ausgewählt werden, wobei M Zr, Hf, Sm, La, Sc sein kann, und Zr ($Ce_{0.85}Zr_{0.15}O_2$) und Hf ($Ce_{1-x}Hf_xO_2$) sein kann, vorzugsweise Ceroxid ist.

4. Das Verfahren zur Herstellung von Synthesegas gemäß einem der vorhergehenden Ansprüche, wobei im Fall, dass das Metalloxid Ceroxid ist, $\beta$ im Bereich von 0,05 bis 0,25 liegt und a im Bereich von 0,05 bis 0,25 liegt, vorzugsweise $\beta$ im Bereich von 0,1 bis 0,25 liegt und a im Bereich von 0,1 bis 0,25 liegt.

5. Das Verfahren zur Herstellung von Synthesegas gemäß einem der Ansprüche 1 bis 3, wobei im Fall, dass das Metalloxid eine feste Lösung aus Ceroxid und Zr, wie ($Ce_{0.85}Zr_{0.15}O_2$) ist, $\beta$ 0,1 oder mehr beträgt oder im Bereich von 0,1 bis 0,2 liegt und a im Bereich von 0,1 oder mehr beträgt oder im Bereich von 0,1 bis 0,2 liegt.

6. Das Verfahren zur Herstellung von Synthesegas gemäß einem der Ansprüche 1 bis 3, wobei im Fall, dass das Metalloxid Nickel-Ferrit ist, $\beta$ 0,3 oder mehr beträgt oder im Bereich zwischen 0,3 und 0,5 liegt und a im Bereich zwischen 0,3 oder mehr beträgt oder im Bereich zwischen 0,3 und 0,5 liegt.

7. Das Verfahren zur Herstellung von Synthesegas nach einem der vorhergehenden Ansprüche, wobei das Verfahren bei einer Temperatur im Bereich von 600 °C bis 1400 °C durchgeführt wird.

8. Das Verfahren zur Herstellung von Synthesegas nach einem der vorhergehenden Ansprüche, wobei das Metalloxid in Form einer porösen Struktur, insbesondere einer offenzelligen Schaumstruktur vorliegt.

**Revendications**

1. Un procédé de production de gaz de synthèse, comprenant les étapes suivantes

   a. générer de l'hydrogène et/ou du monoxyde de carbone à partir d'un gaz hydrocarboné en mettant en contact ledit gaz hydrocarboné avec un oxyde métallique dans un premier état non stœchiométrique $M_xO_{y-\alpha}$ de manière à réduire ledit oxyde métallique dans un premier état non stœchiométrique $M_xO_{y-\alpha}$ vers un deuxième état non stœchiométrique $M_xO_{y-\beta}$ ;

b. générer de l'hydrogène et/ou du monoxyde de carbone à partir d'un gaz régénérant en mettant en contact l'oxyde métallique dans le deuxième état non stœchiométrique $M_xO_{y-\beta}$ avec ledit gaz régénérant de manière à oxyder l'oxyde métallique dans le deuxième état non stœchiométrique $M_xO_{y-\beta}$ vers le premier état non stœchiométrique $M_xO_{y-\alpha}$ ;

**caractérisé en ce que** $\beta > \alpha$ et $\alpha > 0$ et $\beta < y$ et dans lequel $\beta - \alpha$ est compris entre 0,01 et 0,05.

2. Le procédé de production de gaz de synthèse selon la revendication 1, dans lequel le gaz hydrocarboné est choisi parmi le méthane et/ou le gaz de régénération est choisi parmi la vapeur d'eau, le dioxyde de carbone ou des mélanges de vapeur d'eau et de dioxyde de carbone.

3. Le procédé de production de gaz de synthèse selon l'une quelconque des revendications précédentes, dans lequel les oxydes métalliques sont choisis parmi l'oxyde de cérium et les solutions solides d'oxyde de cérium ($Ce_{1-x}M_xO_2$) où M peut être Zr, Hf, Sm, La, Sc, parmi les oxydes métalliques ayant une structure pérovskite $ABO_3$ où A est choisi parmi Sr, Ca, Ba, La et B est choisi parmi Mn, Fe, Ti, Co, Al, comme par exemple $CaTiO_3$, parmi les oxydes de fer tels que l'oxyde de fer (II, III) et les ferrites mixtes $M_xFe_{3-x}O4$ où M est de préférence choisi parmi Zn (Zn-ferrite), Co (Co-ferrite), Ni (Ni-ferrite), Mn (Mn-ferrite), parmi le trioxyde de tungstène ($WO_3$), parmi l'oxyde stannique ($SnO_2$), parmi l'oxyde de cérium ($CeO_2$) et les solutions solides de l'oxyde de cérium ($Ce_{1-x}M_xO_2$) où M peut être Zr, Hf, Sm, La, Sc, comme avec le Zr (par exemple ($Ce_{0.85}Zr_{0.15}O_2$)) et Hf (($Ce_{1-x}Hf_xO_2$), de préférence à partir de l'oxyde de cérium.

4. Le procédé de production de gaz de synthèse selon l'une quelconque des revendications précédentes, dans lequel, dans le cas où l'oxyde métallique est l'oxyde de cérium, $\beta$ est compris entre 0,05 et 0,25 et $\alpha$ est compris entre 0,05 et 0,25, de préférence $\beta$ est compris entre 0,1 et 0,25 et $\alpha$ est compris entre 0,1 et 0,25.

5. Le procédé de production de gaz de synthèse selon l'une quelconque des revendications 1 à 3, dans lequel, dans le cas où l'oxyde métallique est une solution solide d'oxyde de cérium et Zr tel que $Ce_{0.85}Zr_{0.15}O_2$, $\beta$ est égal ou supérieur à 0,1 ; ou compris entre 0,1 et 0,2, et $\alpha$ est égal ou supérieur à 0,1, ou compris entre 0,1 et 0,2.

6. Le procédé de production de gaz de synthèse selon l'une quelconque des revendications 1 à 3, dans lequel, dans le cas où l'oxyde métallique est du nickel-ferrite, $\beta$ est supérieur ou égal à 0,3 ; ou compris entre 0,3 et 0,5, et $\alpha$ est supérieur ou égal à 0,3, ou compris entre 0,3 et 0,5.

7. Le procédé de production de gaz de synthèse selon l'une quelconque des revendications précédentes, dans lequel le procédé est réalisé à une température comprise entre 600 °C et 1400 °C.

8. Le procédé de production de gaz de synthèse selon l'une quelconque des revendications précédentes, dans lequel l'oxyde métallique se présente sous la forme d'une structure poreuse, en particulier d'une structure de mousse à cellules ouvertes.

FIG. 1

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PETER T. KRENZKE** ; **JANE H. DAVIDSON**. Thermodynamic Analysis of Syngas Production via the Solar Thermochemical Cerium Oxide Redox Cycle with Methane-Driven Reduction. *Energy & Fuels*, 2014, vol. 28 (6), 4088-4095